# EUROPEAN PATENT APPLICATION

(11) **EP 1 494 488 A1**
(43) Date of publication of application: **05.01.2005**
(21) Application number: 03014963.7
(22) Date of filing: 01.07.2003
(51) Int. Cl.: H04Q 7/32, G01S 5/14, H04M 1/60, H04R 29/00, H04M 1/06

(54) **Mobile phone comprising position computation means**

(71) Applicant: Precisa Instruments AG, 8953 Dietikon (CH)
(72) Inventor: Huber, Rudolf, 4714 Aedermannsdorf (CH); Allemann, Stephan, 4714 Aedermannsdorf (CH); Bühler, René, 8134 Adliswil (CH)
(74) Representative: Rupp, Christian, Dipl.Phys.

(57) **Abstract**

A mobile phone (1) comprises communication means (3, 5) for communicating via a telephone communication network (40), wherein the telephone communication network (40) comprises a plurality of stationary base stations (41, 42, 43, 44), detection means (3) for detecting both a strength value corresponding to the strength of a signal (61) received from the present base station (44) and an identification code of the present base station (44), position information reception means (2, 4) for continuously or intermittently receiving an information signal of a satellite-based positioning system (31, 32, 33), first computation means (2) for continuously or intermittently computing the current position of the mobile phone (1) based on the signal received by the position information reception means (2, 4) and first storage means (20) for storing the positions computed by the first computation means (2) as first position values.

A mobile phone (1) further comprises second computation means (6) for continuously or intermittently computing the current position of the mobile phone (1) based on the strength value and the identification code detected by the detection means (3) and second storage means (20) for storing the positions computed by the second computation means (6) as second position values.

## Description

The present invention relates to a mobile phone comprising the features of the preamble of claim 1.

Thus, the present invention relates to a mobile phone comprising communication means for communicating via a telephone communication network, the telephone communication network comprising a plurality of stationary base stations, detection means for detecting both a strength value corresponding to the strength of a signal received from the present base station and an identification code of the present base station, position information reception means for continuously or intermittently receiving an information signal of a satellite-based positioning system first computation means for continuously or intermittently computing the current position of the mobile phone based on the signal received by the position information reception means and first storage means for storing the positions computed by the first computation means as first position values.

Such mobile phones are well known from the prior art:

The German patent application DE 196 33 872 A1 discloses a radio-telephone beyond general and conventional communications being additionally fitted with a personal security technique, such as a satellite receiver and an emergency call technique with a trigger. A user receives information via an integrated display about his actual location and destination, using the satellite reception system and correlated destination co-ordinates.

A mobile telephone including a miniature GPS receiver which is integrated into the mobile telephone housing is disclosed by DE 196 46 603 A1. The location co-ordinates are received via a modem and shown on a display. To minimise power consumption the receiver can be switched on by a manual controller when needed and the switched on state can be indicated by e.g. a light diode. Using the manual controller the location co-ordinates determined by the receiver are transmitted via the modem, directly to a help station. There, they are stored, displayed and conveyed to a GPS vehicle navigation system. This then determines the location of the emergency and allows the emergency vehicle to drive straight there. The help station has additional devices for automatically detecting, storing, displaying and further processing the emergency announcements

DE 198 17 962 A1 discloses a GPS module being integrated in a mobile telephone for indicating location. In the event of emergency calls, the current coordinates of the caller are automatically transmitted. The mobile telephone and the GPS module may be operable separately. The co-ordinates may be indicated on the display. An interface may be provided for a computer.

A mobile phone for emergency use is disclosed by DE 296 00 600 U1. Said phone comprises a GPS module and a microcomputer with memory. In case of an emergency the position and an identification code are transmitted to an emergency centre based on operation of the emergency button.

US 5,953,650 discloses a portable-mobile personal security system for a vehicle. Said system includes establishing a telephone call from a portable radiotelephone through a mobile radiotelephone. The telephone call established from the portable radiotelephone is aborted when a sensing device indicates an emergency condition. Then, an emergency telephone call is made to an emergency-call centre through the mobile radiotelephone. While the emergency telephone call is in progress, a geographic position of the vehicle is transmitted to the emergency-call centre. Additionally, a display on the portable radiotelephone displays status information about the emergency telephone call.

US 5,786,789 discloses a battery powered hand-held GPS unit with a built-in cellular telephone. The controls on the GPS unit are used to control cellular telephone operations. The GPS controlled cellular telephone transmits position location information obtained by the GPS unit. Alternatively, a battery powered hand-held cellular telephone unit has a battery power module with a built-in GPS device. The controls on the cellular telephone portion are used to control GPS device operations. The cellular telephone portion is able to transmit position location information obtained by the GPS device. The GPS and a cellular telephone device can function with either a standard battery module, or with a battery module having a cellular telephone or a GPS device built into the battery module.

A personal alarm system in the event of an assault, medical emergency, or any other intrusive wrong-doing is disclosed by US 5,712,619. The known system utilises global positioning system technology and cellular phone technology to transmit the user's longitudinal and latitudinal position to a monitoring station which relays the user's position to the proper authorities. The device includes a housing structure, an alarm activating apparatus secured to the housing structure, an alarm means, a global positioning system positioned within the housing structure, a power source electronically connected to the global positioning system, and a cellular phone system electronically connected to the global positioning system.

A method which is used to operate a portable GPS assisted location and emergency call system wherein an emergency call signal can be transmitted from several portable transmitters and, at the same time, the transmitter can be located using GPS is disclosed in DE 197 06 638 C1. The emergency call signal is put out over a public mobile radio network. The emergency call signal is received only by a regional central receiver station. A bi-directional voice and/or data connection over the mobile radio network is provided between the respective transmitter and the receiver station and is maintained until a release signal specific to the emergency call transmitter is provided e.g. from an emergency service, to lift the speech connection.

DE 197 20 470 A1 discloses a telecommunication device including a casing with at least one call activation device solely associated with a single subscriber number. A selection device is provided for a construction of a wireless telecommunication connection in response to an activation of the call activation device. A memory arrangement is provided for a storage of data, whereby the memory arrangement transfers the data automatically to the subscriber, after the construction of the communication connection. The call activation device is formed as a call key or any manually activated element, operated through pushing or pulling, especially a cut line. The position of caller is determined via a GPS.

A portable emergency locator device including a global positioning system receiver generating location data and a wireless telephone transceiver for transmitting the location data as digital data to a called station during a two-way voice conversation via a wireless telephone network is known from EP 0 809 117 A2. The emergency locator device can be implemented as a conventional wireless telephone having interfaces for receiving the location data from an external GAS receiver and vehicle status data from external vehicle control systems. The data received from the interfaces is stored in an internal memory for transmission to the called station in response to an emergency event trigger.

US 6,044,257 discloses an emergency use only panic button phone provides a low cost comprehensive personal security device. The panic button phone has a large button located on a rigid housing that contains a cellular receiver and transmitter. Pressing the large button allows the user of the panic button phone to establish full duplex cellular voice communications with an emergency response centre and summon emergency response personnel. A global positioning device in the panic button phone provides the location of the operator to the emergency response centre. A small button on the rigid housing activates a noise alarm that alerts individuals in the immediate area that an emergency situation exists. In addition, a second small button activates a radio transmitter that signals the home alarm system of the operator if the operator is near the home when the button is pressed. In response to being signalled, the home alarm system initiates appropriate security measures such as turning on the house's lights and producing an audible alarm.

It is a disadvantage of the known systems that no reliable position information can be provided if the global positioning system is temporarily unavailable e.g. since the US army has decided to turn it off or to impair its accuracy due to military reasons.

On the other hand it is well known that it is frequently impossible to receive a sufficient number of satellite signals at the same time due to geographic circumstances, in wet conditions or inside buildings. In this context it has to be emphasised that it is necessary to receive signals of at least three satellites at the same time to provide reliable position information.

According to the prior art, often the last detected position is output as position information if no current position information can be provided. This outdated position information might be unsuitable to detect the position of the mobile phone in case of an emergency in due time.

Therefore, it is the object of the present invention to propose a mobile phone which allows a reliable position detection even when a sattelite-based positioning system is unavailable.

It is a further object of the present invention to provide a mobile phone which allows an easy and reliable control of its settings and status.

Furthermore, it is an object of the present invention to provide a mobile phone which allows a comfortable hands free telephone communication.

Moreover, it is an object of the present invention to provide a mobile phone which is easy to be used by persons which are blind or have poor eyes.

Additionally it is a further object to provide a suitable docking station for the mobile phone.

The above object is solved in a mobile phone comprising the features of the preamble of independent claim 1 by the features of the characterising part of claim 1. Further developments are set forth in the dependent claims.

The further object are solved by a mobile phone comprising the features of independent claims 25, 27 and 28, respectively.

By the provision of a second computation means for continuously or intermittently computing the current position of the mobile phone based on the strength value and the identification code detected by the detection means and a second storage means for storing the positions computed by the second computation means as second position values, the mobile phone according to the present invention can reliably provide a position information of the mobile phone even when a satellite-based positioning system is unavailable.

It has to be emphasised that the second storage means does not need to be physically separated from the first storage means. Furthermore, the detection means might be integrated either in the communication means or in the second computation means. Moreover, the first computation means might be integrated either in the position information reception means or in the second computation means. There is no need for a physical separation of the first and second computation means, either. Even the first and second storage means might be integrated into the first and second computation means, respectively.

To enhance accuracy of the determined position it is advantageously that the detection means is further adapted for detecting the strength values of signals received from adjacent base stations and the identification codes of adjacent base stations and the second computation means is further adapted to use all strength values and all identification codes detected by the detection means for computing the current position of the mobile phone.

By detection of strength values and identification codes of at least three base stations an accurate position can be determined. In this respect it is emphasised that even base stations of a telephone communication network which can not be used for telephone communication (e.g. due to the provider of the telephone communication network) might be used by the detection means and the second computation means for computing the current position of the mobile phone.

To allow a serious guess about a position of the mobile phone in the near feature (e.g. if no actual position information is available) it is further advantageous if the mobile phone further comprises motion calculation means for calculating a direction and velocity of motion of the mobile phone based on at least two first position values and/or two second position values.

According to a preferred embodiment of the present invention the mobile phone further comprises position message compiling means for compiling a position message comprising the most current position values computed by the first and second computation means, wherein the communication means is adapted to send the position message via said telephone communication network.

Thus, it is possible for someone receiving the position message to detect the current position of the mobile phone e.g. in case of emergencies or if the person carrying the mobile phone got lost (e.g. since the person is a child or unoriented due to its age).

To bridge the time gap between the time the position message is received and the time the mobile phone and thus the person carrying the mobile phone is actually reached e.g. by a rescue team it is very favourable if the position message compiling means is further adapted to compile a motion message comprising the direction and velocity of motion calculated by the motion calculation means, wherein the communication means is adapted to send the motion message together with the position message via said telephone communication network.

Thus, someone seeking the person which is carrying the mobile phone has a good chance to guess where the person carrying the mobile phone meanwhile might have moved to.

This guess can be further improved if the position message compiling means is further adapted to compile a position history message comprising former position values computed by the first and second computation means, wherein the communication means is adapted to send the position history message together with the position message via said telephone communication network.

To ensure that the mobile phone is working well even when the mobile phone itself is not physical present it is further beneficial if the mobile phone further comprises status detecting means for detecting settings and status of the mobile phone and status message compiling means for compiling a status message comprising the settings and status information detected by the status detecting means wherein the communication means is adapted to send the status message via said telephone communication network.

Especially for elder people the various settings of a mobile phone are hard to make. Thus, there is a high risk that the mobile phone is not working properly due to wrong settings.

Therefore, it is preferred that the mobile phone further comprises status setting means for setting settings and status of the mobile phone, wherein the status setting means are adapted to set the settings and status of the mobile phone based on a message received via the telephone communication network, the message comprising an authorisation code.

Thus, it is possible to assist the user of a mobile phone by making the right settings.

To ensure round the clock availability of competent help in case of emergencies it is profitable if the position message and/or motion message and/or status message is sent to a service centre based on a request of the service centre received by the communication means via the telephone communication network.

On the other hand, the position message and/or motion message and/or status message might be sent to an authorised person based on a request of the authorised person received by the communication means via the telephone communication network to avoid costs due to utilisation of a service centre.

To ensure confection of confidentiality it is advantageous if the request for a position message and/or motion message and/or status message has to be filed as a request message which comprises an authorisation code.

Furthermore, to allow identification of the requested information it is beneficial if the request message further comprises a message identification code for identifying the requested message.

To allow both usage of existing short message channels of existing telephone communication networks and automatic processing of the request, the request favourably is filed as a special format short message service message and the position message and/or motion message and/or status message preferably is filed in the short message service format.

To ensure easy and straightforward access to help in case of an emergency the mobile phone according to the present invention further comprises an emergency button wherein the position message and/or motion message and/or status message is automatically sent to a service centre and/or an emergency call number and/or an authorised person based on an operation of the emergency button.

To handle situations where the person carrying the mobile phone is incapable to perform further operation of the mobile phone than operating the alarm button e.g. due to an hart attack, it is profitable if the mobile phone further comprises alarm mode performing means, wherein the alarm mode performing means is adapted to terminate any telephone connection besides a telephone connection with a service centre or an emergency call number or an authorised person, send the position message and/or motion message and/or status message to the service centre and/or the emergency call number and/or the authorised person and automatically answer a phone call of the service centre and/or the emergency call number and/or the authorised person based on an operation of the emergency button.

Thus, in addition to operation of the emergency button no further steps have to be taken by the person carrying the mobile phone to request help of a third party in case of an emergency.

Since the person affected by the emergency is possibly unable to use its hands any more it is very advantageous if the mobile phone further comprises a hands free set means wherein the alarm mode performing means is further adapted to automatically activate the hands free set means based on an operation of the emergency button.

Thus, telephone conversation via the mobile phone with the person affected by the emergency even is possible if the person is not able to move itself anymore e.g. due to an apoplectic stroke.

To allow even a third party which is in the closer environment of the person carrying the mobile phone to recognise the emergency, the alarm mode performing means is preferably further adapted to emit an alarm signal via a load speaker of the mobile phone based on an operation of the emergency button.

It is evident that said alarm signal has to be terminated automatically when a phone call is answered by the mobile phone.

To avoid that the mobile phone is switched off during an emergency due to a faulty operation of an user it is advantageous if the alarm mode performing means is further adapted to disable any keys or touchscreen of the mobile phone based on an operation of the emergency button.

Although short message service channels of telephone communication networks are rather reliable, there is no guarantee or feedback for a person who is sending a message via the short message service channel that the message he send actually has arrived the addressee. In fact, the message might arrive in delay or even never.

Therefore, the alarm mode performing means favourably is further adapted to resend the position message and/or motion message and/or status message to the service centre and/or an emergency call number and/or an authorised person if no call is received from the service centre and/or the emergency call number and/or the authorised person in a first predetermined time period after operation of the emergency button.

Furthermore, there might be a temporarily operational fault with the short message service channels of telephone communication networks. In this case, a message send by the mobile phone based on an operation of the emergency button might not arrive at the addressee at all (or at least not in time).

To overcome this problem, it is beneficial if the alarm mode performing means of the inventive mobile phone is further adapted to automatically establish a phone connection to the service centre and/or the emergency call number and/or the authorised person if no call from the service centre and/or the emergency call number and/or the authorised person is received in a second predetermined time period after operation of the emergency button.

Thus, even if the short message service channels temporarily are not working at all it is guaranteed that the service centre and/or the emergency call number and/or the authorised person automatically can be informed of the emergency by the mobile phone.

Especially in case of emergencies, persons who are using the mobile phone according to the present invention might not be able or not have the time to enter a personal identification number (PIN) to switch the mobile phone.

Thus, according to a further preferred embodiment of the present invention the alarm mode performing means of the mobile phone is further adapted to automatically switch the mobile phone on if it is in an off-state during operation of the emergency button.

Advantageously, the alarm mode performing means is further adapted to allow a termination of the alarm mode only on receipt of a reset message by the communication means via the telephone communication network, the reset message comprising a reset authorisation code.

Thus, it is guaranteed that the alarm mode is deactivated only after the emergency has been dealt with.

To guarantee during hands free telephone communication a good quality of speech output by the mobile phone it is advantageous if the mobile phone further comprises a microphone, an earphone speaker for handset telephone communication and an additional speaker on the backside of the mobile phone for hands free telephone communication, wherein the microphone is used for both handset and hands free telephone communication.

To allow operation of the mobile phone even for persons which are blind or have poor eyes it is beneficial if the mobile phone further comprises display means for showing information and read out means for automatically read out information shown by the display means based on a text to speech algorithm via a speaker of the mobile phone.

Especially for elderly people the various settings of a mobile phone are hard to make. Thus, there is a high risk that the mobile phone is not working properly due to wrong settings.

According to the present invention this object is solved by a mobile phone comprising communication means for communicating via a telephone communication network and status detecting means for detecting settings and status of the mobile phone, wherein the mobile phone further comprises status message compiling means for compiling a status message comprising the settings and status information detected by the status detecting means, wherein the communication means is adapted to send the status message via said telephone communication network to a service centre or an authorised person.

Therefore, it is possible to control the settings made by a user of a mobile phone and the resulting status of the mobile phone by remote.

Advantageously, said mobile phone further comprises status setting means for setting settings and status of the mobile phone, wherein the status setting means are adapted to set the settings and status of the mobile phone based on a message received via the telephone communication network, the message comprising an authorisation code.

Thus, it is possible to correct wrong settings of a mobile phone by distance without the necessity of having the mobile phone physically present.

With most known mobile phones it is a disadvantage, that one common speaker for handset telephone communication and hands free telephone communication is used. In consequence, said speaker is neither optimised for handset telephone communication nor for hands free telephone communication.

To solve this problem, according to a further aspect of the present invention it is proposed to provide a mobile phone comprising communication means for communicating via a telephone communication network, a microphone and an earphone speaker for handset telephone communication, wherein the mobile phone further comprises an additional speaker on the backside of the mobile phone for hands free telephone communication, wherein the microphone is used for both handset and hands free telephone communication.

Thus, one speaker optimised for handset telephone communication and another speaker optimised for hands free telephone communication can be provided.

Most known mobile phones use a graphical user-interface for operation. Said graphical user interfaces are hard to handle for persons which are blind or have poor eyes.

To solve this problem it is proposed to provide a mobile phone comprising communication means for communicating via a telephone communication network and display means for showing information, wherein the mobile phone further comprises read out means for automatically read out information shown by the display means based on a text to speech algorithm via a speaker of the mobile phone.

Another crucial point with mobile phones is self-testing ability. The known self-test programs of mobile phones focus on the communication means but fail in testing further components.

Therefore, according to an additional aspect of the present invention it is proposed to provide a mobile phone comprising communication means for communicating via a telephone communication network, a microphone, a speaker (14, 15) and self-test means, wherein the self-test means are adapted to output tones of specified frequency and level to at least one speaker or buzzer of the mobile phone and to measure the input level of the microphone of the mobile phone.

Thus, correct function of both a microphone and a speaker of the mobile phone can be tested with ease.

Still another aspect of the present invention is directed to a docking station suitable for the mobile phone according to the present invention.

According to a preferred embodiment of the present invention, said Docking station for a mobile phone comprises holding means for mechanically holding the mobile phone in a stable position, contact means to provide electrical contact between the docking station and the mobile phone and power supply means to load a battery of the mobile phone via said contact means, wherein the docking station further comprises ID storing means to store and individual identification code of the docking station, wherein said individual identification code of the docking station is provided to the mobile phone via said contact means.

Thus, the mobile phone can detect the currently used docking station.

To enhance information and data exchange capabilities of the mobile phone it is further preferable if the docking station further comprises data bus connection means to provide electrical contact between a data output means of the docking station and the mobile phone and/or audio connection means to provide electrical contact between an audio input / output means of the docking station and the mobile phone.

In the following detailed description, the present invention is explained by reference to the accompanying drawings, in which like reference characters refer to like parts throughout the views, wherein:
- Fig. 1: shows a block diagram of a mobile phone according to the present invention; and
- Fig. 2: shows how the mobile phone is communicating with a telephone communication network and a sattelite-based positioning system.

A preferred embodiment of the present invention is directed to a portable GSM-GPRS device used for mobile communication and for alarm messaging in case of emergencies. Said phone is capable of placing and receiving phone calls and placing and receiving SMS messages.

Such a phone might be used by two distinct user groups. On the one hand it might be used by seniors who have a limited understanding of technology and user interfaces and who have a elevated probability to encounter (medical) emergency situations. On the other hand it might be used by children (4-8 years) that also have a limited capability to use a telephone and who may have to be located regularly by their parents.

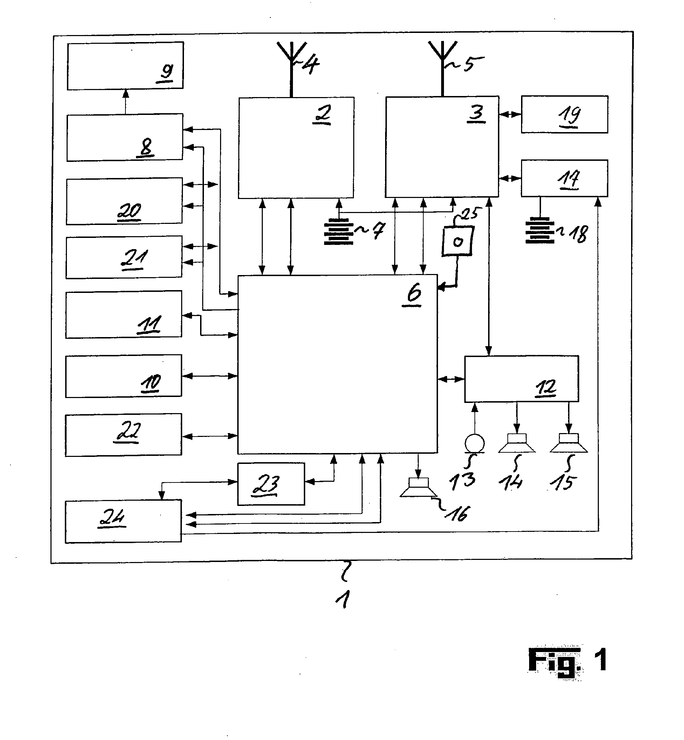

As it is apparent from Fig. 1 the mobile phone 1 comprises communication means for communicating via a telephone communication network 40. Said communication means comprise a GMS-GPRS module 3, a corresponding antenna 5 and a SIM card connector 19. An phone book might be stored on a SIM card connected by the SIM card connector 19 wherein a picture might be dedicated to each entry of the phone book. According to the present embodiment, the antenna 5 is a dual band type for operation in European 900 and 1800 MHz bands.

Furthermore, position information reception means comprising a GPS module 2 and a corresponding antenna 4 are provided for continuously or intermittently receiving an information signal 60 of a satellite-based positioning system (e.g. GPS).

A backup battery 7 is provided for both the GPS module 2 and GSM-GPRS module 3.

The GPS module 2 and GSM GPRS module 3 are connected to a microcontroller 6.

The microcontroller 6 is connected to a display controller 8 which is controlling a display 9, to a flash memory 20, an expansion connector 21, a touch panel 11 being combined with the display 9, keys 10 and an EEPROM 22. The keys 10 might comprise a power on/off button being slightly recessed to prevent accidental use, an OK button to acknowledge actions during operation, a cancel button to cancel actions during operation, a forward button to go forward in the phone book and menus of the mobile phone 1 and a backward button to go backwards in the phone book and menus of the mobile phone 1. To allow further handling of the mobile phone 1 a number dial screen might be shown on the display which is of the touch panel type.

The EEPROM 22 inter alia is used to store configuration data of the mobile phone 1. Furthermore, important software parameters such as timeout values, retry counts, battery detection levels etc. are stored in the EEPROM 22 to allow modification of said values without changing the software.

Furthermore, an universal serial bus 23 and an interface connector 24 are linked to the microcontroller 6. In the present embodiment the interface connector 24 is used for battery charging, serial communication, voice input/output and programming of the mobile phone 1 while the universal serial bus 23 is used for communication with a personal computer and for software and hardware debug support.

A battery management means 17 comprising a main battery 18 are connected to the microcontroller 6 via the interface connector 24 and the GSM GPRS module 3.

Moreover, a buzzer 16 for audible ring and alarm tones is interconnected with the microcontroller. The buzzer 16 is combined with a visual ring indicator and a vibration motor (not shown).

An audio interface 12 which is connected to a microphone 13 an ear piece speaker 14 (earphone speaker) and a ringer/hands free speaker 15 is further provided. Both the microcontroller 6 and the GSM-GPRS module 3 are interconnected with the audio interface 12.

According to this preferred embodiment of the present invention the ringer/hands free speaker 15 is provided on the backside of the mobile phone to allow an optimised acoustic output of the mobile phone during hands free communication while the ear piece speaker 14 is used for handset telephone communication. The microphone 13 is used for both handset and hands free telephone communication. Thus, the microphone 13 and the ringer/hands free speaker 15 provided a hands free set means of the mobile phone 1.

Since the ringer/hands free speaker 15 is provided on the backside of the mobile phone damage to the ear of a user of the mobile phone 1 due to erroneous activation of the hands free set means can be reliably avoided.

To enhance handling of the mobile phone for persons which are blind or have poor eyes a text to speech algorithm is stored in the EEPROM 22. Said text to speech algorithm allows the microcontroller 6 to automatically read out information shown on the display 9 by the audio interface 12 and either the ear piece speaker 14 or the ringer / hands free speaker 15. The audio emitted might comprise voice prompts that pronounce the name, numbers and functions that are being selected by a user. Some voice prompts for predetermined functions of the mobile phone 1 are recorded in the EEPROM 22. In this embodiment the microcontroller 6 (which is working as read out means together with the audio interface 12, the ear piece speaker 14, and the ringer / hands free speaker 15) is further adapted to use the speech to text algorithm to pronounce SMS messages received by the GSM-GPRS module 3.

Furthermore, the microcontroller 6 is to work as a self-test means by using the audio interface 12 to output tones of a specified frequency and level sequentially to the buzzer 16, the ear piece speaker 14 and the ringer / hands free speaker 15. Simultaneously, the input level of the microphone 13 is measured and compared to a pre-set value to establish whether the microphone 13, the ear piece speaker 14, the ringer / hands free speaker 15 and the buzzer 16 are perfectly working.

The ear piece speaker 14, the ringer / hands free speaker 15 and the buzzer 16 are hermetically sealed to a respective output ports chamber to ensure proper frequency response.

Additionally, the microcontroller 6 is adapted to work as status detecting means by detect settings and status of the mobile phone by reading the EEPROM 22 and the flash memory 20 and to compile a status message comprising the detected settings and status information. Furthermore, the microcontroller 6 is adapted to send the status message via the telephone communication network 40 by use of the GSM-GPRS module 3 and the antenna 5.

Moreover, the microcontroller 6 is adapted work as status setting means and thus to adjust settings and status of the mobile phone by controlling the flash memory 20 and the EEMPROM 22. To allow remote control of the mobile phone 1 the microcontroller is further adapted to adjust the settings and the status of the mobile phone 1 based on a message received by the GSM-GPRS module 3 via the telephone communication network 40. To avoid abuse the message is forced to comprise an authorisation code which is controlled by the microcontroller 6.

To improve system stability the mobile phone 1 further comprises a watchdog circuit that needs periodic reset by a software running the microcontroller 6. This watchdog can be switched on by said software while it is physically not possible for the software to switch off the watchdog. If the watchdog is not reset by the software for a certain period of time (e.g. 5 minutes) the watchdog is adapted to reset the software which is running the microcontroller 6.

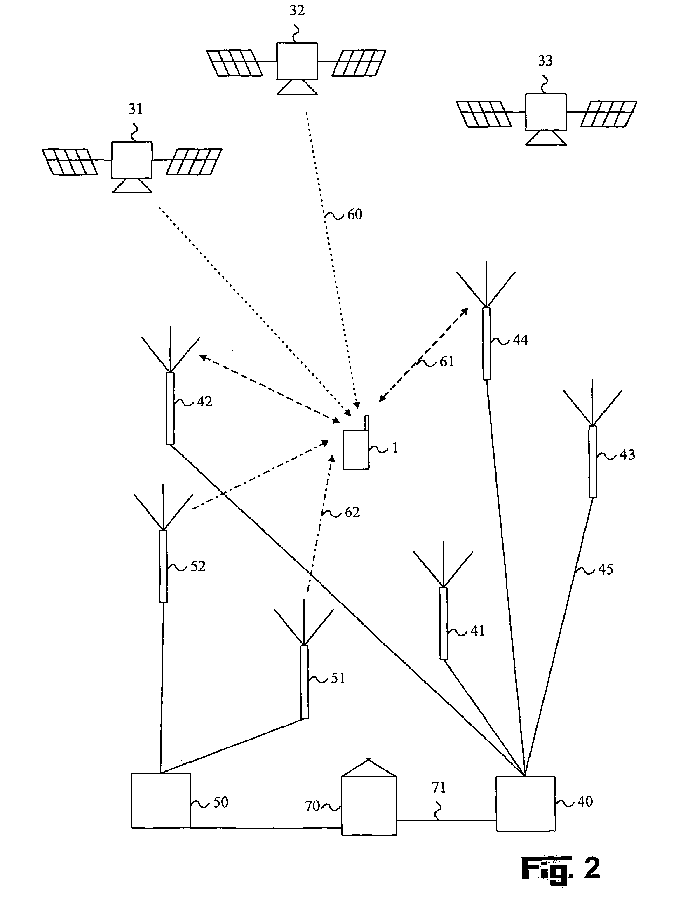

Reference is now made to Fig. 2.

Fig. 2 shows how the inventive mobile phone 1 is communicating with the telephone communication network 40 and the satellite-based positioning system.

Three satellites 31, 32, 33 of a satellite-based positioning system, e.g. the global positioning system GPS are shown in Fig. 2. By use of the antenna 4, the GPS module 2 the mobile phone 1 is adapted to continuously or intermittently receive signals from the satellites 31, 32, 33 via a funk channel 60. Both the antenna 4 and the GPS module 2 built up position information reception means.

Being used as first computation means the GPS module 2 is adapted to continuously or intermittently compute the current position of the mobile phone 1 based on the signal 60 received by the GPS module 2 via the antenna 4 and to store the computed positions in a first memory included to the GPS module 2.

According to an alternative embodiment (which is not shown) the microcomputer might is used as first computation means and the first memory is physically separated from the GPS module.

The telephone communication network 40 shown in Fig. 2 is a conventional telephone communication network like the GSM or UMTS standard and comprises a plurality of stationary base stations 41, 42, 43, 44 which are interconnected by wire 45 or a funk channel to built the telephone communication network 40.

Said telephone communication network 40 is interconnected to a line telephone network 71.

The mobile phone 1 is adapted to communicate with the stationary base stations 41, 42, 43, 44 of the telephone communication network 40 by a funk channel 61.

Furthermore, Fig. 2 depicts a second telephone communication network 50 comprising stationary base stations 51 and 52.

In the present embodiment, the mobile phone 1 is not adapted to establish a communication line with the second telephone communication network 50 since the second communication network 50 belongs to a different provider.

Thus, the mobile phone 1 is adapted to receive signals 62 from the second telephone communication network 50 which are emitted by the stationary base stations 51, 52, only.

According to the present invention, the GSM-GPRS module 3 is used as detection means for detecting both a strength value corresponding to the strength of a signal 61 received from a base station 44 and an identification code of the respective base station 44. Based on the strength value and the identification code detected by the GSM-GPRS module 3 the microcontroller 6 (which is used as second computation means) is further adapted to continuously or intermittently compute the current position of the mobile phone and to store them in the flash memory 20 (which is used as second storage means) as second position values.

According to an alternative embodiment (which is not shown) the microcomputer might is used as detection means and the storage means is integrated to the microcomputer.

According to a further alternative embodiment (which is also not shown) the GSM-GPRS module is used as second computation means and the second memory is integrated to the GSM-GPRS module.

Thus, mobile phone 1 according to the present invention is adapted to reliably provide a position information of the mobile phone 1 even when the satellite-based positioning system is temporarily unavailable.

To enhance the accuracy of the mobile phone 1, the GSM-GPRS module 3 which is working as detection means is further adapted to detect the strength values of signals received from adjacent base stations and the respective identification codes of adjacent base stations 41, 42, 43, 44.

According to the present embodiment even the strength values and identification codes of stationary base stations 51, 52 which can not be used by the mobile phone 1 for telephone communication are detected by the GSM-GPRS module 3.

Being used as second computation means the microcontroller 6 is adapted to use all strength values and all respective identification codes detected by the GSM-GPRS module 3 for computing current position of the mobile phone 1.

To allow a serious guess about the position of the mobile phone 1 in the near future the microcontroller 6 is further adapted to be used as a motion calculation means for calculating a direction and velocity of motion of the mobile phone 1 based on at least two first position values and/or two second position values.

Moreover, the microcontroller 6 is adapted to be used as position message compiling means for compiling a position message comprising the most current position values computed by the GPS module 2 and the microcomputer 6, respectively and to send the position message via the telephone communication network 40 by using the GSM-GPRS module 3 and antenna 5.

According to this embodiment of the present invention, the microcontroller 6 (which is working as position message compiling means) is further adapted to compile a motion message comprising the direction and velocity of motion which has been calculated by the microcomputer when working as motion calculation means.

Furthermore, the microcontroller 6 (still working as position message compiling means) is further adapted to compile a position history message comprising former position values and to send the position history message and the motion message together with the position message via the telephone communication network 40 by using the GSM-GPRS module 3 and the antenna 5.

According to this preferred embodiment of the present invention, the microcontroller 6 s further adapted to send the position message and/or motion message and/or status message to a service centre or an authorised person based on a request of the service centre or the authorised person, respectively. The request which is send via the telephone communication network 40 is received by the antenna 5 of the GSM-GPRS module 3 and is required to comprise an authorisation code to avoid abuse and a message identification code to allow identification of the requested message.

In this embodiment, the request is filed to the mobile phone 1 as a special format short message service (SFSMS) message via the telephone communication network 40 to allow automatic processing of the message by the microcontroller 6 of the mobile phone 1. The position message, motion message and status message are filed by the microcontroller 6 and the GSM-GPRS module 3 in the short message service (SMS) format via a short message service channel of the telephone communication network 40.

According to this preferred embodiment of the present invention, the mobile phone 1 further comprises a prominent one-push emergency button 25 which is connected to the microcontroller 6.

In the following, the function of the emergency button 25 is explained:

Based on an operation of the emergency button 25 for 2 seconds, the position message, motion message and status message is automatically sent via the telephone communication network 40 to a service centre 70, a emergency call number and an authorised person by using the GSM-GPRS module 3 and the antenna 5.

The service centre uses a phone number of the mobile phone 1 or a client number included to the respective message to identify the user of the mobile phone 1 and to find personal or medical information relating to the user in a database. The position message received from the mobile phone 1 is used to map the position of the mobile phone 1 on an area map. An operator of the service centre then tries to call back the mobile phone 1 to establish a voice connection to find out what the emergency is about. Depending on the kind of emergency the operator can notify a doctor, ambulance, police etc..

Furthermore, based on an operation of the emergency button 25 for two seconds, the microcontroller 6 is working as an alarm mode performing means. Thus, the microcomputer 6 is adapted to terminate any telephone connection of the mobile phone 1 besides a telephone connection with the service centre 70, an emergency call number or an authorised person by resetting the GSM-GPRS module 3. Additionally all unnecessary operations of the mobile phone 1 as phone book scrolling or games or menus are terminated. The alarm mode is indicated on the display 9. Moreover, the microcomputer is adapted to automatically send the position message, motion message and status message to the service centre 70, the emergency call number and the authorised person and to automatically answer a phone call of the service centre 70, the emergency call number or the authorised person. If a phone call from someone other than the service centre 70, the emergency call number or the authorised person is received this call is automatically cancelled by the microcomputer 6.

In this context it is emphasised that it is not necessary to send each of the position message, motion message and status message to each of the service centre, the emergency call number and the authorised person but it is sufficient to sent at least the position message to one of the above addressees.

In this regard it is beneficial that the microcontroller 6 (which is still working as alarm mode performing means) is further adapted to automatically control the audio interface 12 to activate the ringer/hands free speaker 15 to perform hands free operation of the mobile phone 1 in case a phone call is received based on the operation of the emergency button 25. Moreover, based on an operation of the emergency button 25 the microcontroller 6 is additionally adapted to control the audio interface 12 to emit an alarm signal via the buster 16, the ear piece speaker 14 and the ringer/ hands free speaker 15 as long as no telephone communication is active and to disable both the touch panel 11 and the keys 10 of the mobile phone 1 to avoid that the mobile phone erroneously is switched off during an emergency.

To guarantee that the service centre, the emergency call number and the authorised person can be informed of an emergency, the microcontroller 6 (still working as alarm mode performing means) is further adapted to resend the position message, motion message and status message to the service centre, the emergency call number and the authorised person if no call is received from the service centre, the emergency call number or the authorised person in a first predetermined time period after operation of the emergency button 25. Said first predetermined time period might be around 30 seconds.

If still no call from the service centre, the emergency call number or the authorised person is received in a second predetermined time period after operation of the emergency button 25 the microcontroller 6 being used as an alarm mode performing means is further adapted to automatically establish a phone connection via the telephone communication network 40 with the service centre 70, the emergency call number or the authorised person by using the GSM-GPRS module 3 and antenna 5. In the present embodiment the second predetermined time period is around 1 minute.

Only in case the mobile phone 1 is switched off during operation of the emergency button 25, the microcontroller 6 working as alarm mode performing means is additionally adapted to automatically switch the mobile phone 1 on.

To guarantee that every emergency is dealt with the microcontroller 6 (still working as alarm mode performing means) is further adapted to allow a termination of the alarm mode only on receipt of a reset message by the GSM-GPRS module 3 and the antenna 5 via the telephone communication network 40. To avoid abuse the reset message is required to comprise a reset authorisation code.

Thus, according to the present invention it is possible to provide a mobile phone 1 which can reliably provide a position information of the mobile phone 1 even when a satellite-based positioning system 30, 31, 32 is unavailable.

A docking station (not shown) for the above described mobile phone comprises holding means for mechanically holding the mobile phone 1 in a stable position, contact means to provide electrical contact between the docking station and the mobile phone 1 and power supply means to load the battery 18 of the mobile phone 1 via said contact means.

Furthermore, the docking station further comprises ID storing means to store and individual identification code of the docking station, wherein the individual identification code of the docking station is provided to the mobile phone 1 via said contact means.

Thus, the mobile phone can detect the currently used docking station. According to the present invention, the microcomputer 6 of the mobile phone 1 is further adapted to include the identification code of the docking station to the position message when working as position message compiling means.

According to a preferred embodiment the docking station further comprises data bus connection means to provide electrical contact between a data output means of the docking station and the mobile phone1 and audio connection means to provide electrical contact between an audio input / output means of the docking station and the mobile phone 1.

Thus, by using the docking station a personal computer, an external microphone and an external speaker might be connected to the mobile phone 1 with ease.

## Claims

1. Mobile phone (1) comprising:
- communication means (3, 5) for communicating via a telephone communication network (40), the telephone communication network (40) comprising a plurality of stationary base stations (41, 42, 43, 44);
- detection means (3) for detecting both a strength value corresponding to the strength of a signal (61) received from the present base station (44) and an identification code of the present base station (44);
- position information reception means (2, 4) for continuously or intermittently receiving an information signal (60) of a satellite-based positioning system (31, 32, 33);
- first computation means (2) for continuously or intermittently computing the current position of the mobile phone (1) based on the signal (60) received by the position information reception means (2, 4); and
- first storage means (20) for storing the positions computed by the first computation means (2) as first position values;
**characterised in that** the mobile phone further comprises
- second computation means (6) for continuously or intermittently computing the current position of the mobile phone (1) based on the strength value and the identification code detected by the detection means (3); and
- second storage means (20) for storing the positions computed by the second computation means (6) as second position values.

2. Mobile phone (1) according to claim 1,
**characterised in that**
the detection means (3) is further adapted for detecting the strength values of signals (61; 62) received from adjacent base stations (41, 42, 43) and the identification codes of adjacent base stations (41, 42, 43; 51, 52); and the second computation means (6) is further adapted to use all strength values and all identification codes detected by the detection means (3) for computing the current position of the mobile phone (1).

3. Mobile phone (1) according to claim 1 or 2,
**characterised in that** the mobile phone (1) further comprises
- motion calculation means (6) for calculating a direction and velocity of motion of the mobile phone (1) based on at least two first position values and/or two second position values.

4. Mobile phone (1) according to one of the preceding claims,
**characterised in that** the mobile phone (1) further comprises
- position message compiling means (6) for compiling a position message comprising the most current position values computed by the first and second computation means (2, 6);
wherein the communication means (3, 5) is adapted to send the position message via said telephone communication network (40).

5. Mobile phone (1) according to claim 4,
**characterised in that**
the position message compiling means (6) is further adapted to compile a motion message comprising the direction and velocity of motion calculated by the motion calculation means,
wherein the communication means (3, 5) is adapted to send the motion message together with the position message via said telephone communication network (40).

6. Mobile phone (1) according to claim 4 or 5,
**characterised in that**
the position message compiling means (6) is further adapted to compile a position history message comprising former position values computed by the first and second computation means (2, 6),
wherein the communication means (3, 5) is adapted to send the position history message together with the position message via said telephone communication network (40).

7. Mobile phone (1) according to one of the preceding claims,
**characterised in that** the mobile phone (1) further comprises
- status detecting means (6) for detecting settings and status of the mobile phone (1); and
- status message compiling means (6) for compiling a status message comprising the settings and status information detected by the status detecting means (6);
wherein the communication means (3, 5) is adapted to send the status message via said telephone communication network (40).

8. Mobile phone (1) according to one of the preceding claims,
**characterised in that** the mobile phone (1) further comprises
- status setting means (6) for setting settings and status of the mobile phone (1);
wherein the status setting means (6) are adapted to set the settings and status of the mobile phone (1) based on a message received via the telephone communication network (40), the message comprising an authorisation code.

9. Mobile phone (1) according to one of the claims 4 to 8,
**characterised in that**
the position message and/or motion message and/or status message is sent to a service centre (70) based on a request of the service centre (70) received by the communication means (3, 5) of the mobile phone (1) via the telephone communication network (40).

10. Mobile phone (1) according to one of the claims 4 to 9,
**characterised in that**
the position message and/or motion message and/or status message is sent to an authorised person based on a request of the authorised person received by the communication means (3, 5) via the telephone communication network (40).

11. Mobile phone (1) according to claim 9 or 10,
**characterised in that**
the request is filed as a request message which comprises an authorisation code.

12. Mobile phone (1) according to claim 11,
**characterised in that**
the request is filed as a request message which further comprises a message identification code for identifying the requested message.

13. Mobile phone (1) according to claim 11 or 12,
**characterised in that**
the request is filed as a special format short message service message; and
the position message and/or motion message and/or status message is filed in the short message service format.

14. Mobile phone (1) according to one of the claims 4 to 10,
**characterised in that** the mobile phone (1) further comprises
- an emergency button (25);
wherein the position message and/or motion message and/or status message is automatically sent to a service centre (70) and/or an emergency call number and/or an authorised person based on an operation of the emergency button (25).

15. Mobile phone (1) according to one of the claims 9 to 14,
**characterised in that** the phone (1) phone further comprises
- an emergency button (25); and
- alarm mode performing means (6), wherein the alarm mode performing means (6) is adapted to:
terminate any telephone connection besides a telephone connection with a service centre (70) or an emergency call number or an authorised person;
send the position message and/or motion message and/or status message to the service centre and/or the emergency call number and/or the authorised person; and
automatically answer a phone call of the service centre (70) and/or an emergency call number and/or an authorised person;
based on an operation of the emergency button (25).

16. Mobile phone (1) according to claim 15,
**characterised in that** the mobile phone (1) further comprises
- a hands free set means (12, 13, 15);
wherein the alarm mode performing means (6) is further adapted to automatically activate the hands free set means (12, 13, 15) based on an operation of the emergency button (25).

17. Mobile phone (1) according to claim 15 or 16,
**characterised in that**
the alarm mode performing means (6) is further adapted to
- emit an alarm signal via a load speaker (14, 15, 16) of the mobile phone (1) based on an operation of the emergency button (25).

18. Mobile phone (1) according to claim 15, 16 or 17,
**characterised in that**
the alarm mode performing means (6) is further adapted to
- disable any keys (10) or touchscreen (11) of the mobile phone (1) based on an operation of the emergency button (25).

19. Mobile phone (1) according to one of the claims 15 to 18,
**characterised in that**
the alarm mode performing means (6) is further adapted to
- resend the position message and/or motion message and/or status message to the service centre (70) and/or an emergency call number and/or an authorised person if no call is received from the service centre (70) and/or the emergency call number and/or an authorised person in a first predetermined time period after operation of the emergency button (25).

20. Mobile phone (1) according to one of the claims 15 to 19,
**characterised in that**
the alarm mode performing means (6) is further adapted to
- automatically establish a phone connection to the service centre (70) and/or the emergency call number and/or an authorised person if no call from the service centre (70) and/or the emergency call number and/or an authorised person is received in a second predetermined time period after operation of the emergency button (25).

21. Mobile phone (1) according to one of the claims 15 to 20,
**characterised in that**
the alarm mode performing means (6) is further adapted to
- automatically switch the mobile phone (1) on if it is in an off-state during the operation of the emergency button (25).

22. Mobile phone (1) according to one of the preceding claims,
**characterised in that**
the alarm mode performing means (6) is further adapted to allow a termination of the alarm mode only on receipt of a reset message by the communication means (3, 5) via the telephone communication network (40), the reset message comprising a reset authorisation code.

23. Mobile phone (1) according to one of the preceding claims,
**characterised in that** the mobile phone (1) further comprises:
- a microphone (13);
- an earphone speaker (14) for handset telephone communication; and
- an additional speaker (15) on the backside of the mobile phone (1) for hands free telephone communication;
wherein the microphone (13) is used for both handset and hands free telephone communication.

24. Mobile phone (1) according to one of the preceding claims,
**characterised in that** the mobile phone (1) further comprises
- display means (8, 9) for showing information; and
- read out means (6, 12, 14, 15) for automatically read out information shown by the display means (8, 9) based on a text to speech algorithm via a speaker (14, 15) of the mobile phone (1).

25. Mobile phone (1) according to one of the preceding claims,
**characterised in that** the mobile phone (1) further comprises
- self-test means (6, 12) being adapted to output tones of specified frequency and level to at least one speaker (14, 15) or buzzer (16) of the mobile phone (1) and to measure the input level of a microphone (13) of the mobile phone (1).

26. Mobile phone (1) comprising:
- communication means (3, 5) for communicating via a telephone communication network (40); and
- status detecting means (6) for detecting settings and status of the mobile phone (1);
**characterised in that** the mobile phone (1) further comprises
- status message compiling means (6) for compiling a status message comprising the settings and status information detected by the status detecting means (6);
wherein the communication means (3, 5) is adapted to send the status message via said telephone communication network (40) to a service centre or an authorised person.

27. Mobile phone (1) according to claim 26,
**characterised in that** the mobile phone (1) further comprises
- status setting means (6) for setting settings and status of the mobile phone (1);
wherein the status setting means (6) are adapted to set the settings and status of the mobile phone (1) based on a message received via the telephone communication network (40), the message comprising an authorisation code.

28. Mobile phone (1) comprising:
- communication means (3, 5) for communicating via a telephone communication network (40);
- a microphone (13); and
- an earphone speaker (14) for handset telephone communication;
**characterised in that** the mobile phone (1) further comprises
- an additional speaker (15) on the backside of the mobile phone (1) for hands free telephone communication;
wherein the microphone (13) is used for both handset and hands free telephone communication.

29. Mobile phone (1) comprising:
- communication means (3, 5) for communicating via a telephone communication network (40); and
- display means (8, 9) for showing information;
**characterised in that** the mobile phone (1) further comprises
- read out means (6, 12) for automatically read out information shown by the display means (8, 9) based on a text to speech algorithm via a speaker (14, 15) of the mobile phone (1).

30. Mobile phone (1) comprising:
- communication means (3, 5) for communicating via a telephone communication network (40);
- a microphone (13);
- a speaker (14, 15); and
- self-test means;
**characterised in that**
the self-test means (6) are adapted to output tones of specified frequency and level to at least one speaker (14, 15) or buzzer (16) of the mobile phone (1) and to measure the input level of the microphone (13) of the mobile phone (1).

31. Docking station for a mobile phone (1) preferably according to one of the preceding claims comprising:
- holding means for mechanically holding the mobile phone (1) in a stable position;
- contact means to provide electrical contact between the docking station and the mobile phone (1); and
- power supply means to load a battery (18) of the mobile phone (1) via said contact means;
**characterised in that** the docking station further comprises
- ID storing means to store and individual identification code of the docking station,
wherein the individual identification code of the docking station is provided to the mobile phone (1) via said contact means.

32. Docking station according to claim 31,
**characterised in that** the docking station further comprises
- data bus connection means to provide electrical contact between a data output means of the docking station and the mobile phone (1).

33. Docking station according to claim 30 or 31,
**characterised in that** the docking station further comprises
- audio connection means to provide electrical contact between an audio input/ output means of the docking station and the mobile phone (1).
